Europäisches Patentamt

European Patent Office

Office européen des brevets

(11) Publication number: **0 080 050**
A1

# (12) EUROPEAN PATENT APPLICATION

(21) Application number: 82109151.9

(22) Date of filing: 04.10.82

(51) Int. Cl.³: **C 01 B 21/068**, C 04 B 35/58

(30) Priority: 19.11.81 JP 185977/81

(43) Date of publication of application: 01.06.83
Bulletin 83/22

(84) Designated Contracting States: **DE FR GB SE**

(71) Applicant: **TOKYO SHIBAURA DENKI KABUSHIKI KAISHA, 72, Horikawa-cho Saiwai-ku, Kawasaki-shi Kanagawa-ken 210 (JP)**

(72) Inventor: Miyano, Tadashi, 6-30-2, Hashimoto, Sagamihara-shi Kanagawa-ken (JP)
Inventor: Nakamura, Kiyoshi, 6162-16, Hinomachi Konan-ku, Yokohama-shi Kanagawa-ken (JP)
Inventor: Kawasaki, Shozo, 1368-4, Yabecho Totsuka-ku, Yokohama-shi Kanagawa-Ken (JP)
Inventor: Kudo, Haruo, 13-18-4, Obuke Nishinecho, Iwate-gun Iwate-ken (JP)
Inventor: Okada, Syozi, 4-421, Toshiba-Sugita Corpo. 2952, Tomiokacho, Kanazawa-ku Yokohama-shi Kanagawa-ken (JP)
Inventor: Ochiai, Toshihiko, 4-37-12, Oyabe, Yokosuka-shi Kanagawa-ken (JP)
Inventor: Inoue, Koichi, 526, Waseda-tsurumakicho, Shinjuku-ku Tokyo (JP)
Inventor: Nishida, Katsutoshi, 6-35-16, Sasage Konan-ku, Yokohama-shi Kanagawa-ken (JP)
Inventor: Nakanishi, Masae, 3-1-307, Hamamidaira, Chigasaki-shi Kanagawa-ken (JP)
Inventor: Ando, Akio, 6-6-3, Nagao Tama-ku, Kawasaki-shi Kanagawa-ken (JP)

(74) Representative: Hansen, Bernd, Dr.rer.nat. et al, Hoffmann . Eitle & Partner Patentanwälte Arabellastrasse 4, D-8000 München 81 (DE)

(54) Powdery silicon nitride composition and sintered body made thereof and processes for preparing the same.

(57) There are disclosed a process for preparing a powdery silicon nitride composition which comprises adding, to silicon having a grain size of ca. 0.01 to 0.05 µm, (a) carbon having a grain size of ca. 0.01 to 0.05 µm and (b) one or more metallic compound selected from (1) the group consisting of salts or oxide of Mg, Ca, Sr and Ba, (2) Al, $Al_2O_3$, $AlF_3$, AlN, $Fe_2O_3$, $SnO_2$, $Nb_2O_5$, $La_2O_3$, $Cr_2O_3$, $CeO_2$ and $Cr_3C_2$ reducing and nitriding the resultant mixture, and a process for preparing a sintered body which comprises molding the thus produced composition in the presence of a sintering additive into a desired shape and then sintering the shaped body at a temperature of ca. 1600 to 1800 °C. The sintered body exhibits excellent strength and can be produced from said composition with a shortened reaction time.

- 1 -

<u>Powdery silicon nitride composition and sintered body</u>
<u>made thereof and processes for preparing the same.</u>

The present invention relates to a powdery silicon nitride
composition and sintered body made thereof and processes
for preparing the same.

As methods of obtaining a powdery silicon nitride, for
example, the following methods have heretofore been
known:

(1)   A method of nitriding a metallic silicon,
(2)   a vapor phase reaction method in which silicon
tetrachloride or silane and ammonia are used as
starting materials, and
(3) · a method of reducing silica with carbon, followed
by nitriding.

However, method (1) mentioned above has the disadvantage
that the metallic silicon itself is expensive and an
obtained silicon nitride is therefore costly, too.
Method (2) above is not fit for mass production, and is
further unsuitable for manufacture of a silicon nitride
for use in an inorganic heat-resistant material.
Additionally, method (3) takes a prolonged time to
complete a reaction therein, which disadvantageously
increases the cost of production.

- 2 -

In the method (3), there have hitherto been proposed, for the purpose of improving the reactivity, a method in which an oxide of iron, or an oxide of Aℓ, Ca or Mg is added (see Japanese Provisional Patent Publication No. 28599/1976) and a method in which an oxide of Mn, Co, Cr or V is added (see Japanese Provisional Patent Publication No. 5700/1977).

According to the methods as proposed in Japanese Provisional Patent Publication Nos. 28599/1976 and 5700/1977, while the effect of shortening the time of reaction can be recognized, lesser amount of α-type silicon nitride and larger amount of β-type silicon nitride tend to be produced. Here, the α-type silicon nitride means a hexagonal $\alpha-Si_3N_4$ having interstitial metal atoms between the crystal lattices; and β-type silicon nitride means a phenacite type hexagonal $\beta-Si_3N_4$. According to the investigation by the present inventors, the proportion of the α-type as a powdery material has noticeable influence upon the properties of a sintered body made thereof. Namely, a sintered body made of α-type silicon nitride is excellent in the strength (from room temperature to around 1200°C), heat-shock resistance and ductility. These effect can remarkably be obtained when the proportion of the α-type is at least 80 %. More preferably, the proportion of the α-type is at least 90 %.

An object of the present invention is to provide a process for preparing a powdery silicon nitride which is manufactured in a curtailed reaction time, which is capable of accepting a sintering treatment with more ease and in which the proportion of α-type silicon nitride is higher, as compared with a conventional composition, and a silicon nitride sintered body obtained by using the resultant silicon nitride.

The process for preparing a powdery silicon nitride composition according to the present invention is carried out by the steps of adding, to silica having a average grain size of ca. 0.01 to 0.05 μm, (a) carbon having an average grain size of ca. 0.01 to 0.05 μm and (b) a metallic compound mentioned below having a average grain size of not more than ca. 5 μm, reducing and nitriding the resultant mixture; and the process for preparing a sintered body according to the present invention is carried out by the procedure of molding the thus obtained composition into a desired shape and sintering it at a temperature of ca. 1600 to 1800°C adding such a sintering additives as a compound selected from the group consisting of $Y_2O_3$, $CeO_2$, $Al_2O_3$, $MgO$, $TiO_2$, $ZrO_2$, $Li_2O$, $SiO_2$ and $AlN$.

The metallic compounds specified in the item (b) include carbonates (such as $CaCO_3$, $SrCO_3$, $BaCO_3$), oxides (such as $CaO$, $SrO$, $BaO$ and $MgO$), fluorides (such as $MgF_2$, $CaF_2$), chlorides (such as $CaCl_2$, $MgCl_2$, $SrCl_2$), sulfates (such as $CaSO_4$, $MgSO_4$) and sulfides (such as $CaS$, $MgS$, $SrS$) of Mg, Ca, Sr and Ba; $Al$, $Al_2O_3$, $AlF_3$, $AlN$, $Fe_2O_3$, $SnO_2$, $Nb_2O_5$, $La_2O_3$, $Cr_2O_3$, $CeO_2$, $Cr_3C_2$ and the like, and selected one or more of these compounds are used.

Amounts of the carbon to be added of the above item (a) used in the present invention are preferably within the range of ca. 40 to 80 parts by weight, more preferably within the range of ca. 40 to 60 parts by weight, with respect to 100 parts by weight of silica.

It is preferred from the viewpoints of reactivity, yield of an α-type silicon nitride and the like that amounts of these metallic compounds to be added are within the range of ca. 0.1 to 20 parts by weight (in terms of a carbonate in the case of a salt of Mg, Ca, Ba or Sr) with respect to 100 parts by weight of silica, but the following ranges are more preferred for the respective metallic compounds:

$MgCO_3$, $CaCO_3$, $SrCO_3$, $BaCO_3$, $MgF_2$, $CaF_2$, oxides of Mg, Ca, Sr and Ba, $SnO_2$, $A\ell F_3$ and $La_2O_3$ ... ca. 0.5 ~ 10 parts by weight (in terms of a carbonate in the case of a salt of Mg, Ca, Sr or Ba),

$A\ell$, $A\ell_2O_3$, $Fe_2O_3$, $Cr_3C_2$ and $A\ell N$ ... ca. 0.5 ~ 5 parts by weight, and

$Nb_2O_5$, $Cr_2O_3$ and $CeO_2$ ... ca. 5 ~ 10 parts by weight.

The present invention is to provide a silicon nitride containing higher proportion of α-type silicon nitride by using finely devided material as prescribed above in proportions as mentioned above. It is considered that this effect can be brought about since the use of finely divided material causes a rapid reaction of $SiO_2$ and C so that the α-type silicon nitride tends to be produced more readily. If the average grain sizes of silica and carbon used in the present invention exceed ca. 0.05 μm and the grain size of the additive metallic compound exceeds ca. 5 μm, the effect obtained becomes low.

When the average grain sizes of silica and carbon are less than ca. 0.01 μm, homogeneous mixing of the silica and the carbon becomes difficult so that the reaction does not proceed uniformly, thus causing a serious problem. Since the amount of the additive to be added is small, the grain size thereof may preferably be as fine as possible. Preferable range of the average grain sizes of silica, carbon and the additive are ca. 0.02 to 0.04 μm, ca. 0.02 to 0.04 μm and not more than ca. 1 μm, respectively.

- 5 -

The powdery silicon nitride composition according to the present invention is prepared by the steps of adding, to silica, (a) carbon and (b) a metallic compound, mixing them, heating the resultant mixture for reduction and nitridation at a temperature of ca. 1400 to 1550°C for a period of ca. 1 to 2 hours while nitrogen is caused to flow at a flow rate of ca. 1 to 10 cm/sec in the system.

In the present invention, the silica, in addition to its single use, may be employed in combination with a small amount of a metallic silicon or silicon nitride, which acts as a seed material for the reduction and the nitriding treatment in order to accelerate the progress of the reactions.

Now, the present invention will be explained in more detail by way of the Examples and Comparative examples illustrated below.

Examples 1 to 28 and Comparative examples 1 to 11

Each of the metallic compounds having a grain size of not more than 5 μ and shown in the following table was mixed with 100 parts by weight of silica and 40 ∿ 80 parts by weight of carbon, and 1.7 g of the resultant mixture was applied onto a graphite boat so that the mixture might be 5 mm in thickness. The boats with each mixture were put in a small-sized Tanmann-furnace having a temperature of 1450°C in which nitrogen gas was flowing at a flow rate of 100 l/hr. After reaction for one or two hours, the graphite boats were taken out and nitrogen analysis, X-ray diffraction and oxygen analysis were carried out for thus obtained products. Some products which were low in the yield of $Si_3N_4$ were

- 6 -

caused to further undergo additional reaction for one hour, and were taken out and subjected to the same tests.

Moreover, a sintering additives (5 parts by weight of $Y_2O_3$ and 2 parts by weight of $Al_2O_3$) was added to each of the resultant compositions, and compression molding was carried out at a pressure of 500 kg/cm$^2$ so as to obtain specimens of rectangular parallelepiped in shape each of which was 30 by 30 by 10 mm in size, and these specimens were sintered under a pressure of 400 kg/cm$^2$ by using a hot press at a temperature of 1750°C for a period of 2 hours. Reactivity and strength of the resultant sintered body were measured. In has been found from the measurements that the reactivity is highly good, a desired silicon nitride can be synthesized in a short period of time, and the strength of the sintered body is so excellent as to be comparable to conventional ones. Results obtained by the measurements are shown in the following table.

Table

| | | Silica | Carbon | | Additive | | Conversion to $Si_3N_4$ | Reaction time | Proportion of α-type $Si_3N_4$ | Grain size of composition | Bending strength |
|---|---|---|---|---|---|---|---|---|---|---|---|
| | | Grain size (μm) | Added amount (parts by weight) | Grain size (μm) | Added amount (parts by weight) | | (%) | (hour) | (%) | (μm) | (kg/mm²) |
| Examples | 1 | 0.035 | 50 | 0.02 | $MgCO_3$ | 1 | 95 | 2 | 90 | 0.8 | 95 |
| | 2 | 0.045 | 40 | 0.05 | $MgCO_3$ | 10 | 99 | 1 | 93 | 0.7 | 92 |
| | 3 | 0.05 | 45 | 0.04 | $CaCO_3$ | 10 | 98 | 1 | 92 | 0.7 | 93 |
| | 4 | 0.02 | 45 | 0.01 | $SrCO_3$ | 1 | 96 | 2 | 90 | 0.8 | 96 |
| | 5 | 0.025 | 50 | 0.04 | $SrCO_3$ | 10 | 98 | 1 | 95 | 0.8 | 90 |
| | 6 | 0.01 | 50 | 0.03 | $MgF_2$ | 1 | 98 | 1 | 96 | 0.8 | 100 |
| | 7 | 0.035 | 45 | 0.04 | $MgF_2$ | 10 | 99 | 1 | 93 | 0.9 | 95 |
| | 8 | 0.03 | 60 | 0.015 | $CaF_2$ | 1 | 96 | 2 | 94 | 0.9 | 100 |
| | 9 | 0.05 | 65 | 0.045 | $CaF_2$ | 10 | 99 | 1 | 95 | 0.8 | 98 |
| | 10 | 0.025 | 75 | 0.02 | Aℓ | 1 | 95 | 2 | 90 | 0.8 | 100 |
| | 11 | 0.038 | 80 | 0.03 | Aℓ | 10 | 98 | 1 | 85 | 0.8 | 89 |
| | 12 | 0.038 | 50 | 0.01 | $Aℓ_2O_3$ | 1 | 98 | 1 | 85 | 1.0 | 85 |
| | 13 | 0.038 | 50 | 0.03 | $Aℓ_2O_3$ | 10 | 99 | 1 | 85 | 1.0 | 82 |
| | 14 | 0.05 | 50 | 0.05 | $AℓF_3$ | 10 | 98 | 1 | 90 | 1.0 | 105 |
| | 15 | 0.035 | 50 | 0.02 | AℓN | 10 | 98 | 1 | 85 | 1.0 | 85 |
| | 16 | 0.035 | 50 | 0.03 | $Fe_2O_3$ | 1 | 99 | 1 | 95 | 1.1 | 98 |
| | 17 | 0.035 | 50 | 0.025 | $SnO_2$ | 1 | 97 | 1 | 93 | 1.1 | 100 |
| | 18 | 0.035 | 50 | 0.03 | $SnO_2$ | 10 | 98 | 1 | 92 | 0.9 | 105 |
| | 19 | 0.035 | 50 | 0.03 | $Nb_2O_5$ | 10 | 98 | 1 | 90 | 0.9 | 95 |

| | | | | | | | | | | |
|---|---|---|---|---|---|---|---|---|---|---|
| Examples | 20 | 0.035 | 50 | 0.03 | $La_2O_3$ 10 | 98 | 1 | 92 | 0.8 | 90 |
| | 21 | 0.035 | 50 | 0.03 | $Cr_2O_3$ 10 | 97 | 1 | 90 | 0.8 | 90 |
| | 22 | 0.035 | 50 | 0.03 | $CeO_2$ 10 | 98 | 2 | 90 | 0.8 | 92 |
| | 23 | 0.035 | 50 | 0.03 | $CrC_2$ 1 | 98 | 1 | 88 | 0.8 | 90 |
| | 24 | 0.035 | 50 | 0.03 | $BaCO_3$ 1 | 95 | 2 | 93 | 0.9 | 95 |
| | 25 | 0.035 | 50 | 0.03 | $BaCO_3$ 10 | 99 | 1 | 90 | 0.8 | 100 |
| | 26 | 0.035 | 50 | 0.03 | $CaCO_3$ 5 + $MgCO_3$ 3 | 99 | 1 | 95 | 0.7 | 100 |
| | 27 | 0.035 | 50 | 0.03 | $A\ell_2O_3$ 3 + $MgCO_3$ 3 + $CaCO_3$ 3 | 99 | 1 | 95 | 0.7 | 105 |
| | 28 | 0.035 | 50 | 0.03 | $CaCO_3$ 5 + $Fe_2O_3$ 3 | 99 | 1 | 97 | 0.7 | 110 |
| Comparative examples | 1 | 0.06 | 50 | 0.06 | $CaCO_3$ 10 | 95 | 1 | 75 | 0.9 | 80 |
| | 2 | 0.08 | 50 | 0.06 | " 10 | 98 | 2 | 75 | 1.1 | 75 |
| | 3 | 0.06 | 50 | 0.08 | $MgCO_3$ 10 | 98 | 2 | 75 | 1.0 | 73 |
| | 4 | 0.05 | 50 | 0.1 | " 10 | 99 | 3 | 70 | 0.9 | 70 |
| | 5 | 0.04 | 50 | 0.1 | $A\ell_2O_3$ 10 | 95 | 2 | 70 | 0.9 | 68 |
| | 6 | 0.03 | 50 | 0.08 | $Fe_2O_3$ 5 | 98 | 2 | 75 | 0.8 | 75 |
| | 7 | 0.08 | 50 | 0.08 | $CaCO_3$ 5 | 98 | 2 | 72 | 1.0 | 70 |
| | 8 | 0.1 | 50 | 0.08 | " 5 | 96 | 2 | 60 | 1.3 | 65 |
| | 9 | 0.15 | 50 | 0.08 | " 5 | 96 | 2 | 55 | 1.3 | 60 |
| | 10 | 0.5 | 50 | 0.08 | " 5 | 95 | 2 | 45 | 1.5 | 66 |
| | 11 | 1.0 | 50 | 0.08 | " 5 | 95 | 2 | 50 | 1.8 | 67 |

Grain size:   Calculated from BET specific surface.

Measurement of proportion of α-type silicon nitride:
            X-ray powder diffraction method.

Bending strength (three point bending method):
            Sample size 3 x 3 x 30 mm
            Span        20 mm
            Cross head speed 0.5 mm/minute.

As is also clear from the above-mentioned Examples and Comparative examples, the powdery silicon nitride composition prepared by addition of a specific metal or its compound followed by reduction and nitriding is obtainable in a shortened time and is noticeably economical.

Further, the sintered body obtained by sintering the aforesaid composition is excellent in strength.

Claims:

1. A process for preparing a powdery silicon nitride composition which comprises adding, to silica having a grain size of ca. 0.01 to 0.05 µm, (a) carbon having a grain size of ca. 0.01 to 0.05 µm and (b) one or more metallic compound selected from (1) the group consisting of salts or oxide of Mg, Ca, Sr and Ba, (2) $Al$, $Al_2O_3$, $AlF_3$, $AlN$, $Fe_2O_3$, $SnO_2$, $Nb_2O_5$, $La_2O_3$, $Cr_2O_3$, $CeO_2$ and $Cr_3C_2$, reducing and nitriding the resultant mixture.

2. A process for preparing a sintered body which comprises adding, to silica having a grain size of ca. 0.01 to 0.05 µm, (a) carbon having a grain size of ca. 0.01 to 0.05 µm and (b) one or more metallic compound selected from (1) the group consisting of salts or oxide of Mg, Ca, Sr and Ba, (2) $Al$, $Al_2O_3$, $AlF_3$, $AlN$, $Fe_2O_3$, $SnO_2$, $Nb_2O_5$, $La_2O_3$, $Cr_2O_3$, $CeO_2$ and $Cr_3C_2$, reducing and nitriding the resultant mixture to produce a powdery silicon nitride composition, and then molding the thus produced composition in the presence of a sintering additives into a desired shape and then sintering the shaped body at a temperature of ca. 1600 to 1800°C.

3. A process according to Claim 1 or 2, wherein the grain sizes of silica, carbon and the metallic compound are ca. 0.02 to 0.04 µm, ca. 0.02 to 0.04 µm and not more than ca. 1 µm, respectively.

4. A process according to Claim 2, wherein the sintering additive is selected from $Y_2O_3$, $CeO_2$, $Al_2O_3$, $MgO$, $TiO_2$ and $AlN$.

5. A process according to Claim 1 or 2, wherein the amount of carbon to be added is in the range of ca. 40 to 80 parts by weight with respect to 100 parts by weight of silica.

6. A process according to Claim 5, wherein the amount of carbon to be added is in the range of ca. 40 to 60 parts by weight with respect to 100 parts by weight of silica.

7. A process according to Claim 1 or 2, wherein the amount of the metallic compound to be added is in the range of ca. 0.1 to 20 parts by weight (in terms of a carbonate in the case of a salt of Mg, Ca, Ba or Sr).

8. A process according to Claim 1 or 2, wherein the reducing and nitriding are carried out at a temperature of ca. 1400 to 1550°C for one to two hours.

9. A powdery silicon nitride composition obtained by the process as claimed in Claim 1.

10. A sintered silicon nitride body obtained by the process as claimed in Claim 2.

11. A powdery silicon nitride composition according to Claim 9 or 10, wherein the conversion to silicon nitride is not less than ca. 95% and the proportion of the α-type silicon nitride therein is not less than ca. 80%.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | C 01 B 21/068 |
| Y | CHEMICAL ABSTRACTS, vol. 92, no. 12, March 1980, page 268, no. 98456a, Columbus Ohio (USA); & JP - A - 79 126 696 (TOKYO SHIBAURA ELECTRIC CO., LTD.) (02-10-1979) *Abstract* | 1-3,5, 6,8-11 | C 04 B 35/58 |
| | --- | | |
| Y | CHEMICAL ABSTRACTS, vol. 90, no. 22, May 1979, page 142, no. 170945n, Columbus Ohio (USA); & JP - A - 78 137 899 (TOKYO SHIBAURA ELECTRIC CO., LTD) (01-12-1978) *Abstract* | 1-3,5, 6,8-11 | |
| | --- | | |
| Y | US-A-4 280 989 (M.SEIMIYA) *Claims 1,7,8; column 1, lines 42-56* | 1-3,8-11 | |
| | --- | | TECHNICAL FIELDS SEARCHED (Int. Cl. ³) |
| Y | DE-A-2 814 235 (TOKYO SHIBAURA ELECTRIC) *Claims 1,5; page 7, lines 18-34; page 8, lines 1-2; pager 10, lines 27-33; page 11, lines 1-3,11-18* | 1-3,8-11 | C 01 B 21/00 C 04 B 35/00 |
| | --- | | |
| Y | GB-A-1 028 977 (E.C.SHEARS) *Claims 2-7,12-18* | 1,2,5-9 | |
| | --- -/- | | |

The present search report has been drawn up for all claims

| Place of search THE HAGUE | Date of completion of the search 23-02-1983 | Examiner SCHURMANS H.D.R. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. 3) |
|---|---|---|---|
| D,Y | CHEMICAL ABSTRACTS, vol. 85, no. 6, 9th August 1976, page 132, no. 35197b, Columbus Ohio (USA); & JP - A - 76 28 599 (ONODA CEMENT CO., LTD.) (10-03-1976) *Abstract* | 1,2,7 9,11 | |
| D,Y | CHEMICAL ABSTRACTS, vol. 86, no. 22, 30th May 1977, page 133, no. 157746w, Columbus Ohio (USA); & JP - A - 77 05 700 (ONODA CEMENT CO., LTD.) (17-01-1977) *Abstract* | 1,2,7 9,11 | |
| Y | CHEMICAL ABSTRACTS, vol. 93, no. 10, September 1980, page 319, no. 100425f, Columbus Ohio (USA); & JP - A - 80 27 843 (TOKYO SHIBAURA ELECTRIC CO., LTD.)(28-02-1980) *Abstract* | 2-4,8 11 | |

TECHNICAL FIELDS SEARCHED (Int. Cl. 3)

The present search report has been drawn up for all claims

| Place of search THE HAGUE | Date of completion of the search 23-02-1983 | Examiner SCHURMANS H.D.R. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82